(19) **Europäisches Patentamt / European Patent Office / Office européen des brevets**

(11) **EP 3 662 988 B1**

(12) **EUROPEAN PATENT SPECIFICATION**

(45) Date of publication and mention of the grant of the patent:
**06.10.2021 Bulletin 2021/40**

(51) Int Cl.:
*B01F 3/08* (2006.01)  *B01F 13/00* (2006.01)
*B01F 15/02* (2006.01)

(21) Application number: **19154449.3**

(22) Date of filing: **30.01.2019**

(54) **METHOD FOR OPTIMIZATION OF DROPLET FORMATION RATE USING DRIPPING/JETTING TO CO-FLOW TRANSITION OF VACUUM-DRIVEN MICROFLUIDIC FLOW-FOCUSING DEVICE WITH RECTANGULAR MICROCHANNELS**

VERFAHREN ZUR OPTIMIERUNG DER TRÖPFCHENBILDUNGSRATE UNTER VERWENDUNG VON TROPFUNG/STRAHLUNG FÜR NEBENSTROMÜBERGANG VON VAKUUMGESTEUERTER, AUF MIKROFLUIDISCHEN STROM FOKUSSIERENDER VORRICHTUNG MIT RECHTECKIGEN MIKROKANÄLEN

PROCÉDÉ D'OPTIMISATION DE LA VITESSE DE FORMATION DE GOUTTELETTES À L'AIDE D'UN ÉGOUTTAGE/JET VERS UNE TRANSITION DE CO-ÉCOULEMENT DE DISPOSITIF DE FOCALISATION DE DÉBIT MICROFLUIDIQUE À VIDE AVEC DES MICROCANAUX RECTANGULAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2018 US 201816207471**

(43) Date of publication of application:
**10.06.2020 Bulletin 2020/24**

(73) Proprietors:
• **President and Fellows of Harvard College Cambridge, MA 02138 (US)**
• **Lee, Seungmin Seoul 06004 (KR)**

(72) Inventors:
• **Lee, Seungmin 06004 Seoul (KR)**
• **Collins, Jesse Wronka Brookline, MA Massachusetts 02446 (US)**

(74) Representative: **Maiwald Patent- und Rechtsanwaltsgesellschaft mbH Elisenhof Elisenstraße 3 80335 München (DE)**

(56) References cited:
WO-A1-2015/088299  WO-A1-2016/126865
WO-A2-2011/028764

## Description

### [Technical Field]

The present invention relates to a method for optimizing the production of droplet formation rates in a microfluidic flow-focusing device with rectangular microchannels by changing the dripping/jetting to co-flow transition points. More specifically, the present invention provides a method for microfluidic users to target more precisely engineered droplet formation rates by varying the channel dimensions of the continuous and dispersed phase at the oil-to-water junction.

### [Background of the Invention]

An emulsion refers to a two-phase system where liquid droplets are suspended in another liquid and the two liquids do not dissolve within another. Common examples of emulsions include oil droplets dispersed in a water-continuous solution or vice-versa. The dispersed phase refers to the liquid phase distributed in the form of droplets in another solution. The continuous phase refers to the surrounding fluid in which the droplets are dispersed.

Droplet-based microfluidics is becoming a more popular platform for encapsulating biochemical reagents and conducting miniaturized reactions in precisely controlled monodispersed emulsions. Microfluidic drop-making technology is used for many biological and chemical assays such as enzymatic kinetic assays, high-throughput screening, hydrogel bead formation and polymer particle synthesis.

As such, as the use of microfluidics becomes more widespread across many multidisciplinary fields for its clinical, pharmaceutical, and biotechnological applications, more convenient, accessible and user-friendly experimental setups for creating emulsions, such as a vacuum pressure system, are desired.

For less experienced microfluidic users, implementing a vacuum system is considered a more convenient experimental setup for producing highly monodispersed droplets compared to other common methods of droplet dispersion such as a syringe pump. Moreover, because a vacuum system can be operated using a manual gas valve, the effects of pressure change in the system is immediate while syringe pumps, operated by an automated software, experience time delays for flow rate changes.

Although a multitude of different microfluidic device configurations have been developed, the most common methods of microfluidic droplet formation include the following geometries: coaxial, T-junction (sometimes Y-junction), and flow-focusing. Coaxial microfluidic devices involve a structure where the inner dispersed phase and the outer continuous phase are hydrodynamically driven in the same direction. T-junction microfluidic devices use three channels where the continuous phase channel converges with a cross flowing dispersed phase side channel. Flow-focusing microfluidic devices use a structure where two continuous phase side channels converge with a central dispersed phase channel which allows the passing fluids to be hydrodynamically focused into a single collection channel.

The aqueous solution may consist of more than one component. Common examples of encapsulated reagents inside water solutions include, but are not limited to, polysaccharides, biological cells, beads, hexanes, proteins, enzymes, antibodies, probes labeled with fluorescence, and other biochemical reagents for analysis.

In some examples, the aqueous solution may also include a surfactant. A surfactant is a substance used to reduce interfacial tension of the suspended liquid droplets and the surrounding fluid, thus reducing coalescence of the dispersed droplets within the solution. A non-ionic surfactant or a phosphate-buffered saline (PBS) can sometimes be used as a surfactant as well. A surfactant can be added to the aqueous solution in concentrations at about 1%, 3%, 5%, 10%, 15%, 20%, about 25% v/v or in the range of any value in between.

In the present invention, an oil solution is inserted into the continuous phase channels. Common examples of oil solutions include industrial oil, such as mineral oil, and cooking oil such as grape seed oil, olive oil, soybean oil, and canola oil. Oil solutions other than the aforementioned examples are used extensively in fields other than microfluidic research. In addition, the oil may include at least one organic or organosilicon compound having a backbone structure including atoms selected from carbon, silicon and oxygen. In all, the oil solution may include a mixture of various organic compounds, a mixture of organosilicon compounds, or any combination thereof. Depending of the specific conditions and needs of the setup, the solution of oil can include any suitable mixture of compounds having different chemical structures and molecular weight.

Oil solutions may contain any of the following organic compounds or a combination thereof: isocetane, 2-(trifluoromethyl)-3-ethoxydodeca fluorohexane (HFE-7500, 3MTM, NovecTM), heptamethyl nonane (HMN), bis(2-ethylhexyl)carbonate, (tridecafluoro-1,1,2,2-tetrahydrooctyl) tetramethyldisiloxane or silicone oil, etc.

Every microfluidic device has to be fine-tuned to satisfy the requirements of each experiment. Therefore, the chemical and physical characteristics of the continuous and dispersed phase as well as the operating parameters of the microfluidic device such as viscosity ratio, flow rate ratio, interfacial tension, channel geometry, and curvature must be carefully selected and engineered. In other words, to effectively optimize microfluidic droplet formation, the user must understand the different physical forces exerted on the dropmaker device.

However, microfluidic users frequently report difficulties arising in accurately managing the flow rates of each phase and finding optimal values of the channel aspect ratio, curvature, interfacial tension and dynamic viscosity of each fluid, thus failing to produce the intended level of droplet formation rates.

Moreover, in the process of soft lithography, rapid prototyping and microfabrication, unintentional changes can be made to the features encoded on the master silicon wafer from the photomask design. The parameters used in the construction process of the device such as the soft and hard baking time, UV exposure time and position of the photomask, and the time of development in propylene glycol methyl ether acetate (PGMEA) solvent can all contribute to design changes on the polydimethylsiloxane (PDMS) chips. Because the channels are constructed at the micro- and even nano-level, such variability in the master can cause notable differences in the droplet formation rates and sizes and flow rates of each phase.

Korean Patent Application No. 10-2015-0051487 reports a method for producing smaller-sized droplets with narrower degrees of distribution and excellent characteristics of monodispersion while controlling the capillary constant and flow rates of both phases. An aqueous solution containing polysaccharides consists of carboxylic acid groups was used as the dispersed phase. An oil solution consisting of calcium ions was used as the continuous phase. It was noted that the microfluidics users experienced difficulty gaining control of the variables used for the experiments such as the flow rates of each phase.

Therefore, there is a strong demand for a method of producing droplets of a targeted rate (that is, the rate that maximizes desired output) in a more accurate and user-friendly way, particularly for simpler experimental setups such as a vacuum-driven system.

According to the Rayleigh-Plateau instability, when there is a perturbation in a jet stream of fluid, there is an increase in Laplace pressure in the thinner regions of the jet. Due to the curvature of the interface, as the internal pressure increases, the thinner regions become thinner and leads to droplet pinchoff. The fluid dynamics associated with droplet breakage in a jet shows the competition between interfacial tension that promotes jet instabilities and the viscous drag of the fluid that resists the perturbations. In general, droplet production in the dripping regime displays low monodispersity because surface tension decreases when the cylindrical jet experiences breakage into drops.

Two dimensionless numbers, Capillary number and Weber number, can be used to characterize the flow of the fluids inside the microfluidic device. Capillary number (Ca) expresses the viscosity of a fluid relative to the effects of surface tension, whereas Weber number (We) represents the inertial force of a fluid relative to the effects of surface tension. Capillary number and Weber number change based on the values of the operating parameters such as flow rate, viscosity, interfacial tension, channel dimension, vacuum pressure, etc. When the Capillary number is greater than 1, viscous forces dominate over interfacial tension, and when the Capillary number is less than 1, interfacial tension outcompetes viscous forces. "Capillary number" (Ca) is defined as the following equation:

$$Ca = \frac{\mu \cdot Q}{\gamma(w \cdot h)}$$

(Here, $\mu$ (Mu) is the dynamic viscosity of fluid, Q is the flow rate, and $\gamma$ (Gamma) is the interfacial tension, and w is the width of the channel, and h is the height of the channel.)

As stated above, Weber number (We) measures the balance between inertial forces and the effects of surface tension. When the Weber number is greater than 1, inertial forces dominate over interfacial tension, and when the Weber number is less than 1, interfacial tension outcompetes inertial forces. "Weber number" (We) is defined as the following equation:

$$We = \frac{\rho v^2 l}{\sigma}$$

(Here, $\rho$ (Rho) is the density of the fluid, v is the velocity, 1 is the characteristic length (typically, the diameter of the droplet), and $\sigma$ (Sigma) is the surface tension.)

WO 2011/028764 A2 describes multiple emulsions created using jetting and other techniques.

WO 2016/126865 A1 describes multiple-emulsion nucleic amplification for nucleic acids in biological systems.

**[Summary of the Invention]**

The objective of the present invention is to introduce a method for controlling droplet formation rates of a vacuum-driven microfluidic setup in a more accurate, easy-to-use, and accessible way. More specifically, the present invention provides a method for gaining control of the formation rate of highly monodispersed droplets of a vacuum-driven microfluidic device at a certain viscosity ratio, density ratio, interfacial tension, and contact angle between the water/oil solution and surface-treated hydrophobic glass/PDMS.

In this regard, as to the method for producing droplets using a vacuum-driven microfluidic flow-focusing device with rectangular microchannels, the inventor of the present invention specifically investigated the correlation of the dimension of the channels and the formation rate of the droplets. The results of the experiment showed that by controlling the height of the continuous and dispersed phase channels, and the width of the central dispersed phase channel, droplets could be controlled and produced at the targeted rate (that is, the rate that maximizes desired output), and the present invention was completed.

By using the methods of optimization introduced in the present invention, microfluidic users are expected to tailor and fine-tune their devices to target more precisely-engineered droplet rates/sizes and flow rates of the continuous and dispersed phases.

The present invention introduces a method for optimizing a microfluidic flow-focusing device with rectangular microchannels using a vacuum system by targeting certain droplet formation rates that best suit the needs of an experiment in, comprising:

1) providing, a microfluidic flow-focusing device with rectangular microchannels, comprising a structure wherein two continuous phase channels consisting of continuous phase inlet and adapter are respectively connected perpendicularly to the end of a dispersed phase channel consisting of dispersed phase inlet and adapter, and the droplets produced in the connecting region of the dispersed phase channel and the two continuous phase channels are discharged to a collection channel;

2) determining, in order to produce droplets of a desired rate, based on the connecting region of the dispersed phase channel and the two continuous phase channels, the heights of the dispersed phase channel and the continuous phase channels and the width of the dispersed phase channel;

3) injecting, an aqueous solution into the dispersed phase channel, and an oil into the continuous phase channels; and

4) applying, vacuum pressure into the collection channel.

The method of the present invention adjusts the heights and widths of the continuous and dispersed phase channels, in particular the heights of the dispersed phase channel and the continuous phase channels at the oil-to-water junction. More specifically, this method pertains to producing droplets in a microfluidic flow-focusing device with rectangular microchannels using a vacuum system, thereby having the effects of producing droplets of a targeted rate (that is, the rate that maximizes desired output) in a more user-friendly, easy-to-use and accessible manner. The present invention will enable microfluidic users unfamiliar with the hydrodynamic principles of fluids to effectively produce precisely-controlled droplet rates/sizes and flow rates of the continuous and dispersed phases.

In essence, the optimized method of the present invention is capable of producing droplets of a targeted rate (that is, the rate that maximizes desired output) when using simplified experimental setups such as a vacuum-driven system.

**[Brief Description of the Drawings]**

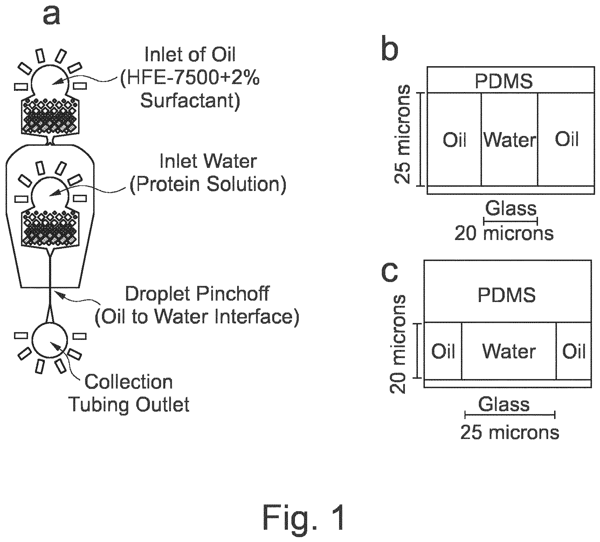

FIG. 1a shows a schematic illustration of the microfluidic dropmaker design used for the present invention. FIG. 1b and 1c represent a cross-sectional view of the interface of the central dispersed-phase channel (indicated as "Water") and the two continuous-phase side channels (indicated as "Oil"). More specifically, FIG. 1b represents an aspect ratio of the water and oil channels where the width of the dispersed phase channel is 20 $\mu m$ and the height of the dispersed phase channel and the continuous phase channel is 25 $\mu m$. FIG. 1c represents an aspect ratio where the width of the dispersed phase channel is 25 $\mu m$, and the height of the dispersed phase channel and the continuous phase channel is 20 $\mu m$.

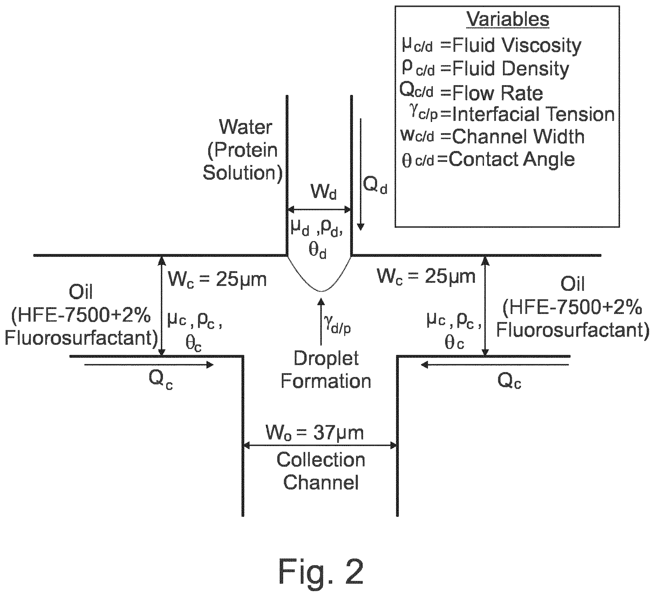

FIG. 2 shows a top-view of the oil-to-water junction and the droplet formation/pinchoff point for all of the microfluidic flow-focusing devices used to develop the present invention. More specifically, the figure shows two continuous-phase side channels (indicated as "Oil (HFE-7500 + 2% Fluorosurfactant)") connected perpendicularly to the end of a central dispersed phase channel (indicated as "Water (Protein solution)"), and the droplets are produced at the interface (e.g. dotted line labeled "droplet formation"), and the formed droplets are discharged to a collection channel. The width of the two side oil channels is 25 $\mu m$ while the width of the central water channel is varied. The width of the collection channel is 37 $\mu m$ while the height of the collection channel is varied accordingly to the height of the water and oil channels.

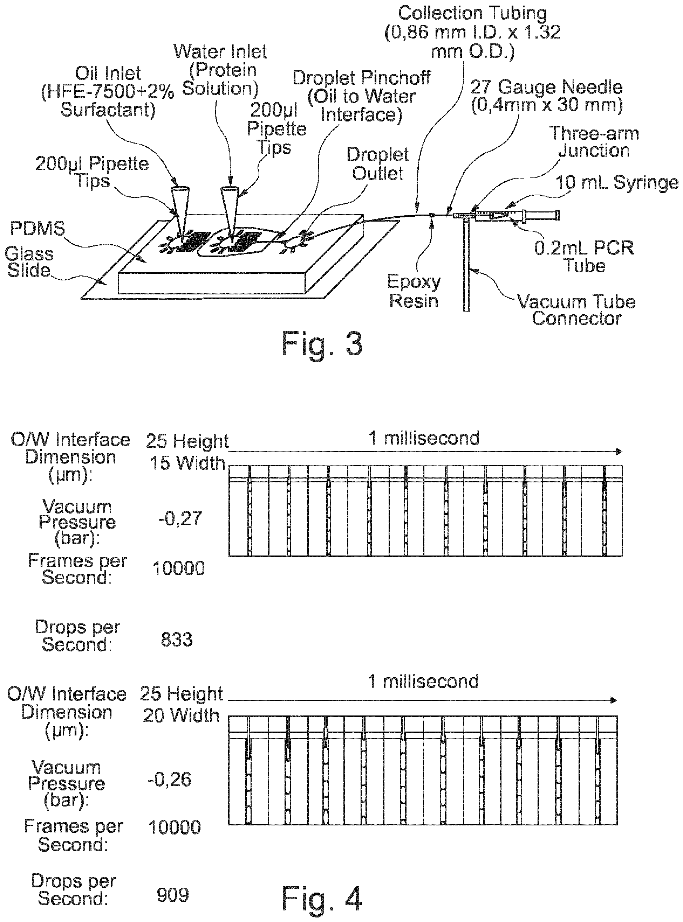

FIG. 3 represents a mimetic diagram of the experimental setup used to produce droplets in a vacuum-driven system. The aqueous solution inserted into the dispersed phase and the oil inserted into the continuous phase meet at the oil-to-water interface or droplet pinchoff to form droplets, and the produced droplets are collected into a PCR tube, placed inside a syringe, through a collection tubing.

FIG. 4 shows a 1 millisecond image sequence of droplet formation at the oil-to-water junction. The heights of the dispersed phase channel and the continuous phase channels are 25 $\mu m$ for both image sequences while the width of the dispersed phase channel is varied (15 $\mu m$ or 20 $\mu m$). A frame rate of 10,000 fps was used for both sequences. A droplet formation of 833 droplets/sec resulted for a dropmaker with a height of 25 $\mu m$ for the continuous and dispersed phase channels and 15 $\mu m$ width for the central dispersed channel at the oil-to-water junction. Similarly, a droplet formation of 909 droplets/sec resulted for a dropmaker with a height of 25 $\mu m$ for the continuous and dispersed phase channels and 20 $\mu m$ width for the central dispersed channel at the oil-to-water junction.

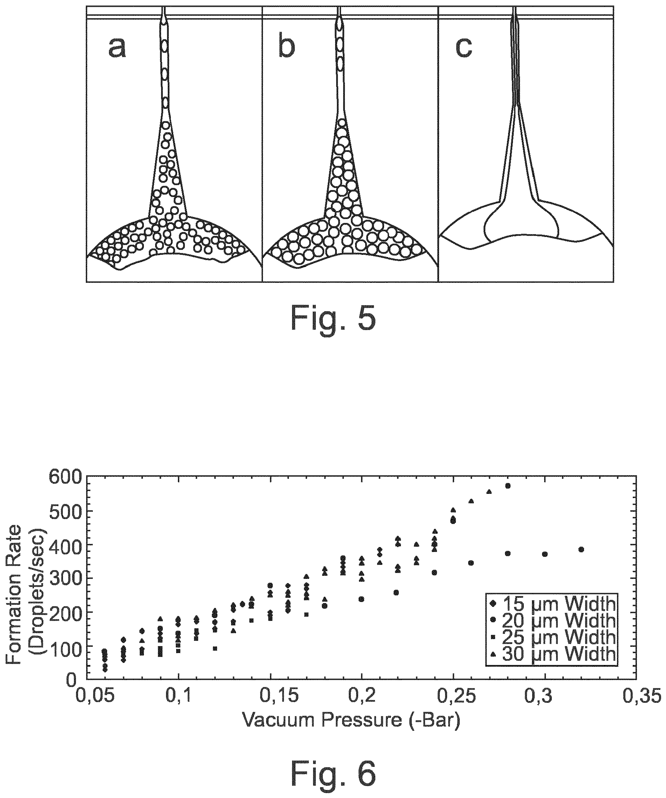

FIG. 5 represents the different flow regimes that can occur as the vacuum pressure increases. The different flow regimes are defined as the following: dripping regime (-0.06 bar, corresponding to a), jetting regime (-0.40 bar, corresponding to b), and co-flow regime (-0.60 bar, corresponding to c).

FIG. 6 shows a graph of all of the recorded droplet formation rates at different vacuum pressures for dropmakers with 20 $\mu m$ heights of the dispersed phase channels and the continuous phase channels and 15 $\mu m$, 20 $\mu m$, 25 $\mu m$ or 30 $\mu m$ width of the dispersed phase channel, respectively, differentiated through color-coding.

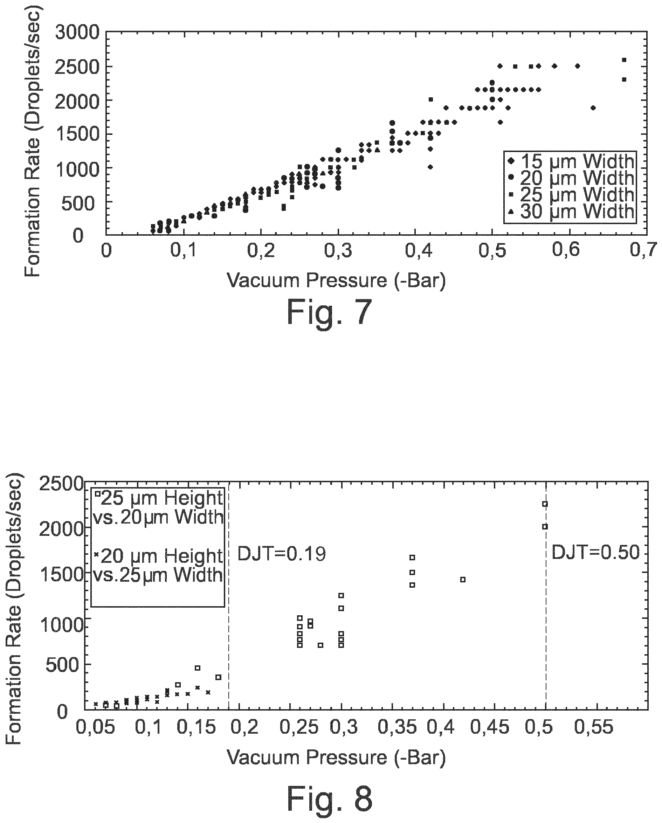

FIG. 7 shows a graph of all of the recorded droplet formation rates at different vacuum pressures for dropmakers with 25 $\mu m$ heights of the dispersed phase channels and the continuous phase channels and 15 $\mu m$, 20 $\mu m$, 25 $\mu m$ or 30 $\mu m$ width of the central dispersed phase channel, respectively, differentiated through color-coding.

FIG. 8 shows a comparison of formation rates of dropmakers with the same cross-sectional area at the oil-to-water interface. More specifically, the graph compares dropmakers with the following dimensions: 1) 25 $\mu m$ height of the dispersed phase channel and the continuous phase channels and 20 $\mu m$ width of the dispersed phase channel, and 2) 20 $\mu m$ heights of the dispersed phase channel and the continuous phase channels and 25 $\mu m$ width of the dispersed phase channel. The average dripping/jetting to co-flow transition for dropmakers with 20 $\mu m$ height continuous and dispersed phase channels and 25 $\mu m$ width central dispersed phase channel is -0.19 bar. The average dripping/jetting to co-flow transition for dropmakers with 25 $\mu m$ height continuous and dispersed phase channels and 20 $\mu m$ width central dispersed phase channel is -0.50 bar. The average dripping/jetting to co-flow transition was obtained by averaging the values of at least three to five unique microfluidic dropmakers.

**[Detailed Description of the Invention]**

The terms used in the specification of the present invention can be defined as follows.

The term "droplet" is defined as a liquid of small volume, typically having a spherical shape, that is surrounded by an immiscible fluid such as the continuous phase of emulsion.

The term "microdroplet" is defined as a droplet with a volume that is equal to or less than 1 microliter, typically between 1 microliter and 1 picoliter. Alternatively, a microdroplet refers to a droplet with a diameter of about 200 micrometer.

The term "oil" refers to any liquid compound that is immiscible with water (or aqueous solution), or a mixture thereof, and typically has a high content of carbon.

The term "channel" is defined as a passage in which fluid flows. Channels can be formed by tubes such as a capillary tube and on planar structures such as a chip or a combination thereof. In this specification, a channel may extend along a planar flow route in a straight line, zigzag, or spiral pattern.

The term "dripping/jetting to co-flow transition" is defined as the critical point at which the viscous stresses of the dispersed phase dominate over interfacial tension where droplet dispersions are no longer observed, and the dispersed phase is carried down the junction by the continuous phase in an undisrupted stream.

Hereinafter, the present invention is explained in detail.

The figures described in the present specification are provided as examples to sufficiently elucidate an idea of the present invention to a person unfamiliar with microfluidic dropmaking. Accordingly, the present invention can be specified in other forms without being limited to the figures presented, and the drawings can be illustrated in exaggeration in order to clarify scientific principles and ideas of the present invention.

The term "targeted rate" or "desired rate" is defined as the intended formation rate of droplets that maximizes output. The formation rate of a droplet can be 300, 500, 800, 1500 or 2,000 droplets/sec, depending on the design of the dropmaker. In the technical field of droplet production, the intended formation rates of droplets differ depending on the specific purpose of use and the form. For example, for biochemical assays involving the encapsulation of DNA oligos, the highest possible droplet formation rate may be targeted given a particular dropmaker design.

Unless defined otherwise, all terms used herein, including the technical or scientific terms, mean the same as normally understood by a skilled person in the art to which the present invention pertains to. Explanations for the features that may unnecessarily blur the gist of the present invention shall be omitted in the explanations and the attached drawings below.

The present invention introduces a method for optimizing a microfluidic flow-focusing device with rectangular microchannels using a vacuum system by targeting certain droplet formation rates that best suit the needs of an experiment in, comprising:

1) providing, a microfluidic flow-focusing device with rectangular microchannels, comprising a structure wherein two continuous phase channels consisting of continuous phase inlet and adapter are respectively connected perpendicularly to the end of a dispersed phase channel consisting of dispersed phase inlet and adapter, and the droplets produced in the connecting region of the dispersed phase channel and the two continuous phase channels are discharged to a collection channel;
2) determining, in order to produce droplets of a desired rate, based on the connecting region of the dispersed phase channel and the two continuous phase channels, the heights of the dispersed phase channel and the continuous phase channels and the width of the dispersed phase channel;
3) injecting, an aqueous solution into the dispersed phase channel, and an oil into the continuous phase channels; and
4) applying, vacuum pressure.

In one specific aspect, the present invention introduces a method for optimizing a microfluidic flow-focusing device with rectangular microchannels using a vacuum system by targeting certain droplet formation rates that best suit the needs of an experiment in, comprising:

1) providing, the microfluidic device was fabricated with PDMS using the standard protocols of rapid prototyping, soft lithography, photolithography and high-resolution printing;
2) providing, the channel heights of the PDMS device were varied by changing the film thickness of an epoxy-based negative photoresist SU-8 using different spin speeds and composition of photoresists;
3) providing, the aqueous solution is a mixture of a buffered saline and protein such as Bovine Serum Albumin and the oil solution contains a polyethylene glycol (PEG)-based fluorinated surfactant;
4) providing, the recorded droplet formation rate corresponding to a particular channel dimension and vacuum pressure is produced when the dynamic viscosity ratio between the water and oil solution is approximately 1, the contact angle of water to surface-treated PDMS and the contact angle of water to surface-treated hydrophobic glass display similar levels of hydrophobicity and interfacial tension is relatively small due to the high protein concentration of the water solution;
5) providing, a microfluidic flow-focusing device with rectangular microchannels, comprising two side oil channels connected perpendicularly to the end of a dispersed phase channel where each phase has a corresponding water/oil inlet, and the droplets produced in the oil-to-water junction or the connecting region of the dispersed phase channel and the two continuous phase channels are discharged to a collection channel and subsequently to a collection tube such as a 1 mL tube or a PCR tube;
6) determining, the droplet formation rate and dripping/jetting to co-flow transition using image sequences acquired by a fast camera at a frame rate of 8,000 to 16,000 fps for at least three to five drop makers of each oil-to-water interface dimension;
7) determining, the heights of the continuous and dispersed phase channels and the width of the central dispersed phase channel based on the oil-to-water junction or connecting region of the dispersed phase channel and the two continuous phase channels in order to produce droplets of a desired rate;
8) delivering, an aqueous solution into the dispersed phase channel, and an oil solution into the continuous phase channels using pipette tips;
9) applying, vacuum pressure using a three-arm junction and a vacuum connector, operated by a manual gas valve or an automated software and measured by a pressure gauge.

The heights of the continuous and dispersed phase channels, and the width of the dispersed phase channel may be appropriately adjusted depending on the desired rate of droplet formation. The heights and widths of the dispersed phase channel and the continuous phase channel may be independently or identically, but not limited, to 5 $\mu m$ to 40 $\mu m$.

The recorded droplet formation rates of the devices showed that changing the height of the continuous and dispersed phase channels had a greater effect on the droplet formation than changing the width of the channels.

As such, the channel dimensions at the oil-to-water interface can be modified accordingly to the aforementioned trend. By increasing the heights of the dispersed phase channels and the continuous phase channels, higher droplet formation rates can be achieved. In opposite, by decreasing the heights of the dispersed phase channels and the continuous phase channels, lower droplet formation rates can be achieved.

Although the data is localized to devices with 20 $\mu m$ to 25 $\mu m$ heights and widths of the continuous and dispersed phase, the same trend in droplet formation rate can be observed in micro fluidic devices with the width of the central dispersed phase channel at the oil-to-water junction ranging from 15 $\mu m$ to 30 $\mu m$, and the height of the dispersed phase channel and the continuous phase channels ranging from 15 $\mu m$ to 30 $\mu m$.

To model a relatively high formation rate, the dimension 25 $\mu m$ was used as the height of the dispersed phase and the continuous phase channels and 20 $\mu m$ was used as the width of the dispersed phase channel.

In contrast, to model a relatively low formation rate, the dimension 20 $\mu m$ was used as the height of the continuous and dispersed phase channels and 25 $\mu m$ was used as the width of the central dispersed phase channel.

By modifying the heights of the dispersed phase channel and the continuous phase channel and the width of the dispersed phase channel, a microfluidic user unfamiliar with the fluid dynamics of the dropmaker design can target certain droplet formation rates by simply determining the optimal height and width of the dispersed and continuous phase channels at the oil-to-water interface.

The vacuum pressure can be adjusted to better achieve droplet formation at a desired rate. At a relatively low vacuum pressure, the invention is at a dripping regime. As the vacuum pressure increases, the invention transitions from a dripping regime to a jetting regime. Then at a critical point, the invention reaches the co-flow regime where both the continuous and dispersed phases are carried down in an undisrupted stream and droplets are no longer produced. Thus, it is preferable to find an optimal vacuum pressure within the range where a co-flow regime does not occur. The vacuum pressure where the co-flow occurs is affected by various operating parameters of the microfluidic device such as the viscosity ratio, flow rate ratio, interfacial tension, etc.

However, the aforementioned parameters are often difficult to manipulate when the composition of the solutions used as the continuous and dispersed phase are fixed. An easy alternative is to modify the channel dimensions and aspect ratios and produce the optimal droplet formation rate. When the height of the dispersed phase channel increases, the vacuum pressure at which the co-flow occurs increases. For example, the pressure at which co-flow regime occurs can be in the range from -0.19 bar to -0.50 bar. Using this information, the user can achieve the desired droplet formation rate that best suits the needs of the experiment simply by adjusting the dimensions of the water and oil channels.

Typically, when a fluid is at a jetting regime, the inertial force of the fluid exceeds interfacial tension, and the fluid flows in the form of a "jet." According to the Rayleigh-Plateau instability, when the jet is left in an uninterrupted state or in the absence of any additional fluid interacting with the jet at a position relatively far from the entry of the jetting fluid, droplets can form by breakage, but this does not always occur. In contrast, when the fluid is in a "dripping" regime, interfacial tension dominates over the viscous stresses of the fluid, causing droplet dispersion upon entry into the channel.

As the height of the continuous and dispersed phase channels increases, the hydrodynamic resistance of both phases decreases which means the flow rate is higher relative to the same vacuum pressure for higher-height devices compared to lower-height devices. (Height is a more significant parameter than width when determining channel resistance for rectangular microchannels.)

The oil solution used for the present invention includes a surfactant. The surfactant included in the continuous phase facilitates and stabilizes droplet dispersions by reducing coalescence and promoting channel wetting. The types of surfactant used for the present invention are not limited to achieving the purpose of the present invention as shown by examples such as sorbitan monooleate.

The microfluidic device used for the experiment can be prepared based on polymers, for example, elastomers such as polydimethylsiloxane (PDMS) or polytetrafluoroethylene (PTFE or Teflon®), etc., in mixture with a curing agent. For example, by separately manufacturing a fluid system using PDMS or other soft lithography techniques, a microfluidic channel can be implemented.

As other non-restrictive examples of polymers, polyethylene terephthalate (PET), polyacrylate, polymethacrylate, polycarbonate, polystyrene, polyethylene, polypropylene, polyvinylchloride, cyclic olefin copolymer (COC), polytetrafluoroethylene, fluorinated polymer, silicone such as polydimethylsiloxane, polyvinylidene chloride, bis-benzocyclobutene (BCB), polyimide, fluorinated derivatives of polyimide, etc. can be exemplified.

The channel of the present invention can be processed with various coating substances. For example, to imbue some or all channels with a hydrophobic or hydrophilic property, respectively, the surface of the channels are treated with coating substances such as siloxane.

Hereinafter, the present invention will be explained in greater detail with descriptions of preparation examples and embodiments. However, the explanations are merely used the purposes of providing better insight into the present invention, and the scope of the present invention shall not be construed as being limited to the preparation examples and embodiments described below.

**[EXAMPLES]**

Preparation Example 1: Device for producing droplets

In the present example, the microfluidic flow-focusing device used was fabricated with PDMS (polydimethylsiloxane) using the standard protocols of rapid prototyping, soft lithography and photolithography.

After curing the PDMS in the oven at 65°C, 1mm sized holes were punched through the water and oil inlets and collection outlets. The PDMS slab was plasma-bonded onto a glass slide, and the channel was treated with Aquapel (manufactured by PPG Industries) to render them hydrophobic.

The microfluidic flow-focusing device manufactured in the present example uses an oil-to-water interface structure that has two continuous phase channels connected perpendicularly to the end of a dispersed phase channel as shown in FIG. 1a.

In the present example, in order to verify the effects of the dimensions of the continuous and dispersed phase channels on the formation rate of droplets, based on the connecting region of the dispersed phase channel and the two continuous phase channels, multiple microfluidic flow-focusing devices with different heights of the continuous and dispersed phase channels and width of the central dispersed phase channel were manufactured. More specifically, the height of the channels was changed using different spin speeds and photoresists to adjust the film thickness of an SU-8 film. Moreover, the width of the dispersed phase channel was controlled by modifying the photomask design and using the high-resolution printing. The device was manufactured such that the heights of the dispersed phase channel and the continuous phase channels were 20 $\mu m$ or 25 $\mu m$, and that the width of the dispersed phase channel was 15 $\mu m$, 20 $\mu m$, 25 $\mu m$ or 30 $\mu m$.

The cross-section of an example microfluidic device with 25 $\mu m$ height water and oil channels and 15 $\mu m$ width central water channel at the oil-to-water junction is shown in FIG 1b. Similarly, the cross-section of an example microfluidic device with 15 $\mu m$ height water and oil channels and 25 $\mu m$ width central water channel at the oil-to-water junction is shown in FIG 1c.

All PDMS microfluidic devices used for the present invention were manufactured such that the widths of the continuous phase channels were 25 $\mu m$, and that the width of the collection channel was 37 $\mu m$. The top view of the oil-to-water junction where the two side oil channels and the central water channel converge is shown in FIG. 2.

For the dispersed phase, an aqueous solution (protein solution) consisting of 69.9% of pure water (DI water), 10% of tris-buffer saline solution (Sigma-Aldrich, MO), 20% of glycerol (Sigma-Aldrich, MO) and TBS, and 0.1% of fluorescent additive and bovine serum albumin (Sigma-Aldrich, MO) was used. For the continuous phase, an oil solution consisting of 2-(trifluoromethyl)-3-ethoxydodecafluorohexane (HFE-7500, Novec 7500, 3M, MN) comprising and PEG-based fluorosurfactant (2% by volume) was used. A detailed summart of the physical properties of the fluid (aqueous solution and oil) are shown as in [Table 1] below.

[Table 1]

| Parameter | Value | Units |
|---|---|---|
| Density of Water Solution ($\rho_d$) | 1.02 | g/cm$^3$ |
| Dynamic Viscosity of Water Solution ($\mu_d$) | 1.75±0.22 | mPa |
| Density of Oil($\rho_c$) | 1.61 | g/cm$^3$ |
| Dynamic Viscosity of Oil ($\rho_c$) | 1.75 | mPa |
| Contact Angle of Water to Surface-treated Hydrophobic PDMS ($\theta_{d/p}$) | 93.1 | ° |
| Contact Angle of Water to Surface-treated Hydrophobic Glass Slide ($\theta_{d/g}$) | 96.8 | ° |
| Contact Angle of Oil to Surface-treated Hydrophobic PDMS ($\theta_{c/p}$) | 0 (Complete Wetting) | ° |
| Interfacial Intension ($\gamma$) | 6.77±0.25 | mN/m |

Using a 200$\mu$l pipette tip, aqueous solution (protein solution) and oil (HFE-7500 + 2% Surfactant) were each inserted into the dispersed phase inlet and the continuous phase inlet, respectively. Then, droplets were produced by applying vacuum pressure. The produced droplets were discharged through a collection channel and were collected in a PCR tube inside a syringe. FIG. 3 provides a more detailed illustration of present invention's experimental setup.

Example 1

To observe the effects of channel dimensions on droplet formation rates, a PDMS microfluidic flow-focusing device with 25 $\mu m$ height oil and water channels and 15 $\mu m$ width central water channel and another a microfluidic device with 25 $\mu m$ height water and oil channels and 20 $\mu m$ width central water channel were manufactured. During droplet production, a vacuum pressure of -0.26 to -0.27 bar was applied to both of the devices.

The formation rate of the droplet was calculated using image sequences obtained by a high speed camera recorded at a frame speed of 10,000 fps. At least three to five droplets were averaged to find the droplet formation rate at a particular vacuum pressure. The result is shown in FIG. 4.

The two devices used in FIG. 4 had the same 25 $\mu m$ heights for the continuous and dispersed channels while the width of the central water channels differed by 5 $\mu m$. The dropmaker with the narrower width (15 $\mu m$) produced a formation rate of 833 drop/sec while the dropmaker with wider width (20 $\mu m$) produced a formation rate of 909.

However, despite the 33.3% (from 15 $\mu m$ to 20 $\mu m$) increase in the width of the dispersed phase channel, the formation rate of the droplets (drops per second) increased only by 9.1%. Thus, the difference in droplet formation rate relative to the change in the width of the dispersed phase is considered significantly less substantial compared to the difference in droplet rate relative to the change in height of the continuous and dispersed phase channels.

The aforementioned example elaborated in this example serves as a representative sample of the general trend observed in the larger data set shown in FIG. 6 and 7.

Example 2

A PDMS microfluidic flow-focusing device with 25 $\mu m$ heights continuous and dispersed channels and 15 $\mu m$ width central dispersed phase channel was prepared to observe the three distinct types of flow regimes. An aqueous solution (protein solution) was inserted as the dispersed phase and an oil solution with polyethylene glycol (PEG) based flurosurfactant was used as the continuous phase. A vacuum pressure was applied to hydrodynamically focus both fluids into a collection channel where an emulsion was created, the vacuum pressure was adjusted using a manual gas valve and pressure value was measured using a pressure gauge.

A dripping regime was observed at a vacuum pressure of -0.06 bar. A jetting regime was observed at a vacuum pressure of -0.40 bar. A co-flow regime was observed at a vacuum pressure of -0.60 bar. These flow regimes are shown in FIG. 5a, b, and c, respectively. When a strong vacuum pressure is applied, and the device reaches the dripping/jetting to co-flow transition, droplets are no longer produced but instead, both fluids are carried down in an continuous stream.

Example 3

A PDMS microfluidic flow-focusing device in which the heights of the continuous and dispersed phase channels were 20 $\mu m$ or 25 $\mu m$ and the width of the central dispersed phase channel was 15 $\mu m$, 20 $\mu m$, 25 $\mu m$, or 30 $\mu m$ was manufactured to observe the difference in formation rates relative to changes in channel height. An aqueous solution (protein solution) was inserted as the dispersed phase and an oil solution with polyethylene glycol (PEG) based flurosurfactant was used as the continuous phase.

All recorded droplet formation rates relative to vacuum pressure for microfluidic devices in which the heights of the continuous and dispersed phase channels were 20 $\mu m$ and the width of the central dispersed phase channel was 15 $\mu m$, 20 $\mu m$, 25 $\mu m$, or 30 $\mu m$ are shown in FIG. 6. All recorded droplet formation rates relative to vacuum pressure for microfluidic devices in which the heights of the continuous and dispersed phase channels were 25 $\mu m$ and the width of the central dispersed phase channel was 15 $\mu m$, 20 $\mu m$, 25 $\mu m$, or 30 $\mu m$ are shown in FIG. 7.

When the heights of the continuous and dispersed phase channels were 20 $\mu m$ and the width of the central dispersed phase channel was 15 $\mu m$, the maximum droplet formation rate was about 380 droplets/sec. When the heights of the continuous and dispersed phase channels were 20 $\mu m$ and the width of the central dispersed phase channel was 20 $\mu m$, the maximum droplet formation rate was about 570 droplets/sec. When the heights of the continuous and dispersed phase channels were 20 $\mu m$ and the width of the central dispersed phase channel was 25 $\mu m$, the maximum droplet formation rate was about 220 droplets/sec. When the heights of the continuous and dispersed phase channels were 20 $\mu m$ and the width of the central dispersed phase channel was 30 $\mu m$, the maximum droplet formation rate was about 570 droplets/sec. All of the aforementioned maximum formation rates are shown in FIG. 6.

When the heights of the continuous and dispersed phase channels were 25 $\mu m$ and the width of the central dispersed phase channel was 15 $\mu m$, the maximum droplet formation rate was about 2500 droplets/sec. When the heights of the continuous and dispersed phase channels were 25 $\mu m$ and the width of the central dispersed phase channel was 20 $\mu m$, the maximum droplet formation rate was about 2250 droplets/sec. When the heights of the continuous and dispersed phase channels were 20 $\mu m$ and the width of the central dispersed phase channel was 25 $\mu m$, the maximum droplet formation rate was about 2600 droplets/sec. When the heights of the continuous and dispersed phase

channels were 20 $\mu m$ and the width of the central dispersed phase channel was 30 $\mu m$, the maximum droplet formation rate was about 1250 droplets/sec. All of the aforementioned maximum formation rates are shown in FIG. 7.

FIG. 6 and 7 show that height of the channel is a much more significant factor in determining droplet formation rate than the width of the channel. More specifically, when the height was increased by 25.0% (increase from 20 $\mu m$ to 25 m), the maximum droplet formation rate increased by approximately 4.3 times.

Example 4

To better understand changes in droplet formation rate relative to the effects of channel aspect ratios, PDMS microfluidic flow-focusing devices with the same cross-sectional areas at the oil-to-water interface were each manufactured. More specifically, a microfluidic device with 25 $\mu m$ height continuous and dispersed phase channels and 20 $\mu m$ width central water channel, and another microfluidic device with 20 $\mu m$ height continuous and dispersed phase channels and 25 $\mu m$ width central dispersed phase channel were constructed. An aqueous solution (protein solution) was inserted as the dispersed phase and an oil solution with polyethylene glycol (PEG) based flurosurfactant was used as the dispersed phase. Droplet production was performed by applying a vacuum pressure and hydrodynamically focusing both fluids into the collection channel.

As shown in FIG. 8, the microfluidic device with 25 $\mu m$ height continuous and dispersed phase channels and 20 $\mu m$ width central dispersed phase channel (indicated as □ in FIG. 8) experienced a co-flow regime when the vacuum pressure reached -0.5 bar. However, the microfluidic device with 20 $\mu m$ height continuous and dispersed phase channels and 25 $\mu m$ width central dispersed phase channel (indicated as x in FIG. 8) experienced a co-flow regime when the vacuum pressure reached -0.19 bar. The dripping/jetting to co-flow transition was determined by averaging at least three to five dropmakers for both devices. Therefore, considering the two devices with the same cross-sectional area but with opposing dimensions, the dropmaker design with higher heights displayed a substantially higher droplet formation rate than the dropmaker design with the same cross-sectional area but with lower heights.

As such, certain droplet formation rates can be targeted by simply changing the dimensions of the continuous and dispersed phase channels at the oil-to-water interface. To increase the formation rate of droplets, the height of the continuous and dispersed phase channels can be increased to an appropriate degree. In opposite, to decrease the formation rate of droplets, height of the continuous and dispersed phase channels can be lowered to an appropriate degree.

**Claims**

**1.** A method for optimizing a microfluidic flow-focusing device with rectangular microchannels using a vacuum system by targeting certain droplet formation rates that best suit the needs of an experiment in, comprising:

1) providing, a microfluidic flow-focusing device with rectangular microchannels, comprising a structure wherein two continuous phase channels consisting of continuous phase inlet and adapter are respectively connected perpendicularly to the end of a dispersed phase channel consisting of dispersed phase inlet and adapter, and the droplets produced in the connecting region of the dispersed phase channel and the two continuous phase channels are discharged to a collection channel;

2) determining, in order to produce droplets of a desired rate, based on the connecting region of the dispersed phase channel and the two continuous phase channels, the heights of the dispersed phase channel and the continuous phase channels and the width of the dispersed phase channel;

3) injecting, an aqueous solution into the dispersed phase channel, and an oil into the continuous phase channels; and

4) applying, vacuum pressure into the collection channel.

**2.** A method for optimizing a microfluidic flow-focusing device according to Claim 1, wherein the heights of the continuous and dispersed phase channels range from 15 $\mu m$ to 30 $\mu m$.

**3.** A method for optimizing a microfluidic flow-focusing device according to Claim 1, wherein the width of the dispersed phase channel ranges from 15 $\mu m$ to 30 $\mu m$.

**4.** A method for optimizing a microfluidic flow-focusing device according to Claim 1, wherein the heights of the continuous and dispersed phase channel are 20 $\mu m$ or 25 $\mu m$.

**5.** A method for optimizing a microfluidic flow-focusing device according to Claim 1, wherein the heights of the continuous and dispersed phase channels are 25 $\mu m$ wherein the width of the dispersed phase channel is 15, 20, 25, or 30 $\mu m$, respectively.

6. A method for optimizing a microfluidic flow-focusing device according to Claim 1, wherein the heights of the dispersed phase channel and the continuous phase channel are 25 $\mu m$, and the width of the dispersed phase channel are 15, 20, 25, or 30 $\mu m$, respectively.

7. A method for optimizing a microfluidic flow-focusing device according to Claim 1, wherein the heights of the continuous and dispersed phase channel are 20 $\mu m$, and the width of the dispersed phase channel is 25 $\mu m$.

8. A method for optimizing a microfluidic flow-focusing device according to Claim 1, wherein the step 4) is, applying vacuum pressure until the flow regime changes into a continuous co-flow.

9. A method for optimizing a microfluidic flow-focusing device according to Claim 6, wherein vacuum pressure is -0.5 bar.

10. A method for optimizing a microfluidic flow-focusing device according to Claim 7, wherein vacuum pressure is -0.19 bar.

11. A device for producing droplets performing the method according to any one of Claims 1 to 10, comprising two continuous phase channels, a dispersed phase channel, a collection channel and a vacuum system.


**Patentansprüche**

1. Verfahren zur Optimierung einer mikrofluidischen Flussfokussiervorrichtung mit rechteckigen Mikrokanälen unter Verwendung eines Vakuumsystems, indem bestimmte Tröpfchenbildungsraten angestrebt werden, die den Erfordernissen eines Experiments am besten entsprechen, umfassend:

1) Bereitstellung einer mikrofluidischen Flussfokussierungsvorrichtung mit rechteckigen Mikrokanälen, die einen Aufbau umfasst, bei der zwei Kanäle für kontinuierliche Phase, die aus Einlass und Adapter für kontinuierliche Phase bestehen, jeweils senkrecht mit dem Ende eines Kanals für dispergierte Phase verbunden sind, der aus Einlass und Adapter für dispergierte Phase besteht, und die Tröpfchen, die im Verbindungsbereich des Kanals für dispergierte Phase und der beiden Kanäle für kontinuierliche Phase erzeugt werden, in einen Sammelkanal abgeleitet werden;
2) Bestimmung der Höhen des Kanals für dispergierte Phase und der Kanäle für kontinuierliche Phase sowie der Breite des Kanals für dispergierte Phase, um Tröpfchen mit einer gewünschten Rate zu erzeugen, basierend auf dem Verbindungsbereich des Kanals für dispergierte Phase und der beiden Kanäle für kontinuierliche Phase;
3) Einspritzen einer wässrigen Lösung in den Kanal für dispergierte Phase und eines Öls in die Kanäle für kontinuierliche Phase; und
4) Ausüben von Vakuumdruck in den Sammelkanal.

2. Verfahren zur Optimierung einer mikrofluidischen Flussfokussiervorrichtung nach Anspruch 1, wobei die Höhen der Kanäle für kontinuierliche und dispergierte Phasen im Bereich von 15 $\mu m$ bis 30 $\mu m$ liegt.

3. Verfahren zur Optimierung einer mikrofluidischen Flussfokussiervorrichtung nach Anspruch 1, wobei die Breite des Kanals für dispergierte Phase im Bereich von 15 $\mu m$ bis 30 $\mu m$ liegt.

4. Verfahren zur Optimierung einer mikrofluidischen Flussfokussiervorrichtung nach Anspruch 1, wobei die Höhen der Kanäle für kontinuierliche und dispergierte Phase 20 $\mu m$ oder 25 $\mu m$ betragen.

5. Verfahren zur Optimierung einer mikrofluidischen Flussfokussiervorrichtung nach Anspruch 1, wobei die Höhen der Kanäle für kontinuierliche und dispergierte Phase 25 $\mu m$ betragen, wobei die Breite des Kanals für dispergierte Phase entsprechend 15, 20, 25 oder 30 $\mu m$ beträgt.

6. Verfahren zur Optimierung einer mikrofluidischen Flussfokussiervorrichtung nach Anspruch 1, wobei die Höhen der Kanäle für dispergierte Phase und kontinuierliche Phase 25 $\mu m$ betragen und die Breite des Kanals für dispergierte Phase entsprechend 15, 20, 25 oder 30 $\mu m$ beträgt.

**7.** Verfahren zur Optimierung einer mikrofluidischen Flussfokussiervorrichtung nach Anspruch 1, wobei die Höhen der Kanäle für kontinuierliche und dispergierte Phase 20 $\mu m$ betragen und die Breite des Kanals für dispergierte Phase 25 $\mu m$ beträgt.

**8.** Verfahren zur Optimierung einer mikrofluidischen Flussfokussiervorrichtung nach Anspruch 1, wobei der Schritt 4) darin besteht, Vakuumdruck auszuüben, bis sich das Flussregime in einen kontinuierlichen Zusammenfluss ändert.

**9.** Verfahren zur Optimierung einer mikrofluidischen Flussfokussiervorrichtung nach Anspruch 6, wobei der Vakuumdruck -0,5 bar beträgt.

**10.** Verfahren zur Optimierung einer mikrofluidischen Flussfokussiervorrichtung nach Anspruch 7, wobei der Vakuumdruck -0,19 bar beträgt.

**11.** Vorrichtung zur Herstellung von Tröpfchen, die das Verfahren nach einem der Ansprüche 1 bis 10 durchführt, umfassend zwei Kanäle für kontinuierliche Phase, einen Kanal für dispergierte Phase, einen Sammelkanal und ein Vakuumsystem.

**Revendications**

**1.** Procédé d'optimisation d'un dispositif de focalisation d'écoulement microfluidique avec des microcanaux rectangulaires utilisant un système sous vide en ciblant certaines vitesses de formation de gouttelettes qui correspondent au mieux aux besoins d'une expérience, comprenant les étapes consistant à :

1) fournir, un dispositif de focalisation d'écoulement microfluidique avec des microcanaux rectangulaires, comprenant une structure dans laquelle deux canaux à phase continue constitués d'une entrée et d'un adaptateur en phase continue sont respectivement connectés perpendiculairement à l'extrémité d'un canal à phase dispersée constitué d'une entrée et d'un adaptateur en phase dispersée et les gouttelettes produites dans la région de connexion du canal à phase dispersée et les deux canaux à phase continue sont déchargées dans un canal de collecte ;

2) déterminer, pour produire des gouttelettes d'une vitesse souhaitée, sur la base de la région de connexion du canal à phase dispersée et des deux canaux à phase continue, les hauteurs du canal à phase dispersée et des canaux à phase continue, et la largeur du canal à phase dispersée ;

3) injecter, une solution aqueuse dans le canal à phase dispersée et une huile dans les canaux à phase continue ; et

4) appliquer, une pression sous vide dans le canal de collecte.

**2.** Procédé d'optimisation de dispositif de focalisation d'écoulement microfluidique selon la revendication 1, dans lequel les hauteurs des canaux à phase continue et dispersée se situent dans la plage de 15 $\mu m$ à 30 $\mu m$.

**3.** Procédé d'optimisation de dispositif de focalisation d'écoulement microfluidique selon la revendication 1, dans lequel la largeur des canaux à phase dispersée se situe dans la plage de 15 $\mu m$ à 30 $\mu m$.

**4.** Procédé d'optimisation de dispositif de focalisation d'écoulement microfluidique selon la revendication 1, dans lequel les hauteurs du canal à phase continue et dispersée sont de 20 $\mu m$ ou de 25 $\mu m$.

**5.** Procédé d'optimisation de dispositif de focalisation d'écoulement microfluidique selon la revendication 1, dans lequel les hauteurs des canaux à phase dispersée et à phase continue sont de 25 $\mu m$, la largeur du canal à phase dispersée étant de 15, 20, 25 ou 30 $\mu m$, respectivement.

**6.** Procédé d'optimisation de dispositif de focalisation d'écoulement microfluidique selon la revendication 1, dans lequel les hauteurs du canal à phase dispersée et du canal à phase continue sont de 25 $\mu m$, et la largeur du canal à phase dispersée est de 15, 20, 25 ou 30 $\mu m$, respectivement.

**7.** Procédé d'optimisation de dispositif de focalisation d'écoulement microfluidique selon la revendication 1, dans lequel les hauteurs du canal à phase continue et dispersée sont de 20 $\mu m$, et la largeur du canal à phase dispersée est de 25 $\mu m$.

**8.** Procédé d'optimisation de dispositif de focalisation d'écoulement microfluidique selon la revendication 1, dans lequel l'étape 4) consiste en appliquer une pression sous vide jusqu'à ce que le régime d'écoulement change en un co-écoulement continu.

**9.** Procédé d'optimisation de dispositif de focalisation d'écoulement microfluidique selon la revendication 6, dans lequel la pression sous vide est de -0,5 bar.

**10.** Procédé d'optimisation de dispositif de focalisation d'écoulement microfluidique selon la revendication 7, dans lequel la pression sous vide est de -0,19 bar.

**11.** Dispositif de production de gouttelettes mettant en œuvre le procédé selon l'une quelconque des revendications 1 à 10, comprenant deux canaux à phase continue, un canal à phase dispersée, un canal de collecte, et un système sous vide.

## Fig. 1

Fig. 2

Oil Inlet
(HFE-7500+2%
Surfactant)

Water Inlet
(Protein
Solution)

200µl
Pipette
Tips

Droplet Pinchoff
(Oil to Water
Interface)

Collection Tubing
(0,86 mm I.D. x 1.32
mm O.D.)

27 Gauge Needle
(0,4mm x 30 mm)

Three-arm
Junction

10 mL Syringe

200µl Pipette
Tips

Droplet
Outlet

PDMS
Glass
Slide

Epoxy
Resin

0.2mL PCR
Tube

Vacuum Tube
Connector

Fig. 3

O/W Interface
Dimension
(µm):

25 Height
15 Width

1 millisecond

Vacuum
Pressure
(bar):

-0,27

Frames per
Second:

10000

Drops per
Second:

833

O/W Interface
Dimension
(µm):

25 Height
20 Width

1 millisecond

Vacuum
Pressure
(bar):

-0,26

Frames per
Second:

10000

Drops per
Second:

909

Fig. 4

Fig. 5

Fig. 6

Fig. 7

Fig. 8

**EP 3 662 988 B1**

**REFERENCES CITED IN THE DESCRIPTION**

**Patent documents cited in the description**

- KR 1020150051487
- WO 2011028764 A2
- WO 2016126865 A1